# FASCICULE DE BREVET EUROPEEN

(11) **EP 2 050 213 B1**
(45) Date de publication et mention de la délivrance du brevet: **13.11.2013**
(21) Numéro de dépôt: 07823593.4
(22) Date de dépôt: 17.07.2007
(51) Int. Cl.: H04B 10/2587

(54) **RESEAU OPTIQUE PASSIF LONGUE DISTANCE UTILISANT LA MODULATION DEPORTEE D'UN SIGNAL OPTIQUE D'AMPLIFICATION**
PASSIVES OPTISCHES FERNNETZ MIT EXTERNER MODULATION EINES OPTISCHEN VERSTÄRKUNGSSIGNALS
LONG-DISTANCE PASSIVE OPTICAL NETWORK USING THE OFF-SITE MODULATION OF AN OPTICAL AMPLIFYING SIGNAL

(30) Priorité: 20.07.2006 FR 0653039
(43) Date de publication de la demande: 22.04.2009
(73) Titulaire: Orange, 75015 Paris (FR)
(72) Inventeur: GENAY, Naveena, F-22300 Lannion (FR); PINCEMIN, Erwan, F-22290 Gommenec'H (FR); LE GUYADER, Bertrand, F-22660 Trevou Treguignec (FR)
(86) Numéro de dépôt international: PCT/FR2007/051673
(87) Numéro de publication internationale: WO 2008/009849

(56) Documents cités:
- EP-A- 1 435 701
- EP-A1- 0 717 516
- FR-A- 2 685 150
- US-A- 4 775 971
- US-A1- 2003 118 280

## Description

L'invention concerne le domaine des réseaux d'accès optique et plus particulièrement, le domaine des réseaux d'accès optiques passifs ou PON (Passive Optical Networks).

Les réseaux d'accès optiques passifs présentent une portée classique de l'ordre de 20 km (kilomètres). Cette portée limitée du réseau tient au fait que dans les réseaux optiques passifs, les différents composants optiques que sont, par exemple, les coupleurs optiques, les multiplexeurs optiques ou les fibres optiques, occasionnent des pertes de puissance optique des signaux transitant dans le réseau et que les signaux émis ne peuvent pas être amplifiés sans contraintes pour compenser de telles pertes. En effet, dans un réseau optique passif, les signaux optiques descendants, c'est-à dire les signaux optiques émis par le central à destination des abonnés, et les signaux optiques remontants, c'est-à-dire les signaux optiques émis par les équipements abonnés à destination du central optique, sont véhiculés par une unique fibre optique. Ceci permet de réduire le coût du réseau. Toutefois, l'utilisation d'une unique fibre optique pour véhiculer les signaux optiques descendants et remontants introduit des contraintes sur les puissances d'émission de ces signaux optiques, ce qui se traduit par une portée limitée du réseau.

Si la portée des réseaux d'accès optiques passifs est suffisante dans les zones urbaines où les abonnés sont situés à des distances relativement faibles des centraux optiques, de l'ordre de 5 à 10 km, ce n'est pas le cas des abonnés situés dans les zones rurales. Dans ces zones, les abonnés sont souvent dispersés géographiquement et sont donc le plus souvent situés à une distance des centraux optiques supérieure à la portée classique d'un réseau optique passif. Ces abonnés ne peuvent donc pas bénéficier de la transmission haut débit offerte par les réseaux optiques passifs et par conséquent des services offerts qui nécessitent une connexion à haut débit.

Les inventeurs de la présente demande de brevet, lors de travaux précédents ont réalisé un réseau optique passif longue distance. Un tel réseau optique passif longue distance est décrit dans la demande de brevet français n°06 52705 au nom des mêmes déposants que la présente demande de brevet. Il s'agit par exemple d'un réseau de type point à multipoints tel que représenté à la figure 1. Un central optique OC constitue une première extrémité du réseau. Une première extrémité d'une fibre optique 14 est connectée à la sortie du central optique OC. Une deuxième extrémité de la fibre optique 14 est connectée à l'entrée d'au moins un coupleur optique 15 une entrée vers N sorties, N représentant le nombre de branches que possède le réseau. La fibre optique 14 est appelée branche principale du réseau. Une première extrémité d'une fibre optique 16ⱼ, j ∈ {1, 2, ..., N}, est connectée à l'une des N sorties Sⱼ du coupleur optique 15. Une deuxième extrémité de la fibre optique 16ⱼ est connectée à un dispositif de terminaison de ligne 17ᵢ, i ∈ {1, 2, ..., N} auquel sont connectés un ou plusieurs abonnés. Les fibres optiques 16₁ à 16_{N} sont appelées branches secondaires du réseau.

Le central optique OC comporte un premier laser 10 émettant un signal optique associé à une longueur d'onde particulière. Ce signal optique véhicule dans le réseau des données à destination des différents abonnés connectés selon le principe du multiplexage temporel. Le central optique comporte également une deuxième diode laser 110 émettant un signal optique d'amplification associé à une longueur d'onde particulière distincte de la longueur d'onde associée au signal optique de données.

Dans un tel réseau, une section de fibre optique dopée à l'erbium 18 est insérée dans la fibre optique principale 14. Cette section de fibre optique 18 sert de milieu d'amplification passif.

Le signal optique d'amplification issu de la première diode laser 110 excite les atomes d'erbium présents dans la section de fibre optique 18. Lors du retour des atomes d'erbium à leur état non excité, ceux-ci libèrent des photons en vertu du principe de l'émission stimulée dont la longueur d'onde correspond à la longueur d'onde du signal optique de données transitant dans le réseau. Ces photons vont permettre d'augmenter la puissance optique du signal de données. Une telle technique est dite technique d'amplification déportée puisque le milieu d'amplification 18 se situe dans le réseau alors que les moyens d'amplification, ici la diode laser 110, se situent dans le central optique OC. Ainsi, en augmentant la puissance optique du signal de données I, il est possible de lui faire parcourir une distance plus grande. Un tel réseau peut atteindre une portée de l'ordre de la centaine de kilomètres.

La demande de brevet EP 0717516 A1 divulgue une telle technique pour un système à une seule longueur d'onde pour les signaux optiques descendant et montant.

Il existe, bien entendu d'autres milieux et d'autres techniques d'amplification passives en ligne, telle que la technique d'amplification dite par effet RAMAN. Cette dernière technique utilise la fibre optique 14 comme milieu d'amplification.

Toutefois, bien que l'utilisation de milieux d'amplification passifs permette de réduire les coûts d'un réseau optique passif, les réseaux d'accès optiques passifs restent des réseaux coûteux pour les opérateurs en télécommunications. En effet, de tels réseaux optiques passifs sont équipés, à leurs extrémités, de nombreux composants coûteux et consommateurs en énergie électrique, tels que les lasers d'émission des signaux de données, les diodes lasers servant de moyens d'amplification, ou encore les moyens d'émission actifs disposés dans les dispositifs de terminaison de ligne. De plus, de tels réseaux desservent un grand nombre d'abonnés, ce qui contribue à augmenter le nombre de ces composants et donc le coût du réseau. Ainsi, il existe un besoin de réduire davantage les coûts d'exploitation de tels réseaux optiques passifs.

L'invention répond à ce besoin de réduction des coûts d'exploitation d'un réseau optique passif sans introduire d'éléments supplémentaires dans le réseau.

En effet, la présente invention concerne un réseau optique passif comprenant un central optique relié à au moins un équipement de terminaison de ligne par au moins une branche dudit réseau, ladite branche comprenant au moins un milieu d'amplification passif, ledit central comprenant
- des moyens d'émission/réception d'un premier signal optique de données,
- des premiers moyens d'amplification comprenant des moyens d'émission d'au moins un deuxième signal optique d'amplification, ledit deuxième signal excitant le milieu d'amplification de sorte à amplifier la puissance optique d'un signal optique,
ledit dispositif de terminaison de ligne comprenant :
- des moyens de réception du premier signal optique,
- des moyens de modulation du deuxième signal optique d'amplification
- des moyens d'injection dudit deuxième signal modulé dans ledit réseau.

Le deuxième signal d'amplification est un signal continu émis par les moyens d'émission des moyens d'amplification disposés dans le central optique afin d'exciter le milieu d'amplification compris dans une branche du réseau selon l'invention. Les moyens d'émission des moyens d'amplification sont couramment appelés pompe. En sortie de la pompe, le deuxième signal optique d'amplification continu ne véhicule aucune donnée. L'invention se propose d'utiliser ce signal au niveau des dispositifs de terminaison de ligne afin de véhiculer des données à destination du central optique, c'est-à-dire dans le sens remontant. Le deuxième signal optique est, par conséquent, modulé avec les données à véhiculer au niveau du dispositif de terminaison de ligne.

Ainsi, selon l'invention, le deuxième signal optique assure deux fonctions distinctes. Dans un premier temps il permet d'exciter le milieu d'amplification afin de permettre l'augmentation de la puissance optique du signal de données descendant et dans un deuxième temps, il permet de transporter des données dans le sens remontant.

La modulation du deuxième signal optique d'amplification par des moyens de modulation disposés au niveau de chaque dispositif de terminaison de ligne permet de supprimer les moyens d'émission actifs classiquement disposés dans les dispositifs de terminaison de ligne. Compte tenu du nombre d'abonnés pouvant être connectés à un réseau d'accès optique passif, le fait de supprimer les moyens d'émission actifs présents dans les dispositifs de terminaison de ligne permet de réduire de manière significative le coût d'exploitation du réseau.

Selon une caractéristique du réseau selon l'invention, celui-ci comprend
- des moyens de séparation des premiers et deuxièmes signaux optiques,
- des moyens d'amplification dudit deuxième signal optique,
lesdits moyens de modulation du deuxième signal optique sont connectés en sortie des moyens de séparation des premier et deuxième signaux, et en entrée des moyens d'amplification dudit deuxième signal optique.

Dans un exemple de mise en oeuvre de la présente invention, les moyens de modulation consistent en un modulateur à électro-absorption, les moyens de séparation des premier et deuxième signaux en un réseau de Bragg et enfin, les moyens d'amplification en un amplificateur à semi-conducteurs. Tous ces composants optiques pris séparément sont des composants optiques que l'on trouve couramment sur le marché et qui sont produits à grande échelle. Ainsi, un dispositif de terminaison de ligne selon un tel exemple de mise en oeuvre est peu coûteux.

Selon un premier mode de réalisation du réseau selon l'invention, la branche du réseau comprend une première fibre optique, et les premiers moyens d'amplification comprennent des premiers moyens d'émission du deuxième signal optique d'amplification et des deuxièmes moyens d'émission d'un troisième signal optique d'amplification permettant d'amplifier ledit deuxième signal optique.

Dans ce mode de réalisation, les signaux descendant et remontant circulent dans une même fibre optique. Donc, la puissance optique d'émission du deuxième signal d'amplification, servant également à acheminer les données dans le sens remontant, ne doit pas dépasser une certaine valeur au-delà de laquelle un effet de rétrodiffusion de Rayleigh, néfaste pour le récepteur, serait induit. Afin que le deuxième signal optique puisse atteindre le dispositif de terminaison de ligne avec une puissance suffisante pour pouvoir être modulé, il faut augmenter sa puissance optique. C'est pourquoi, on utilise des deuxièmes moyens d'émission des premiers moyens d'amplification, qui constituent une deuxième pompe, dont la fonction est d'exciter le milieu passif d'amplification de manière à augmenter la puissance optique du deuxième signal optique. Le signal optique issu de cette deuxième pompe ne permet pas d'amplifier la puissance optique du premier signal de données. De plus, le troisième signal optique permet d'augmenter la puissance optique du deuxième signal optique aussi bien dans le sens descendant que dans le sens remontant.

Selon un deuxième mode de réalisation du réseau selon l'invention, dans lequel le réseau comprend au moins deux dispositifs de terminaison de ligne chacun relié par une première, et respectivement, une deuxième branche du réseau à un élément de distribution, ledit élément de distribution étant lui-même relié au central optique par une troisième branche du réseau, le réseau comprend en outre des deuxièmes moyens d'amplification reliés audit élément de distribution, lesdits deuxièmes moyens d'amplification étant aptes à amplifier la puissance optique d'un signal optique destiné à être distribué par ledit élément de distribution.

En disposant des moyens d'émission des deuxièmes moyens d'amplification, constituant une troisième pompe, à proximité de l'élément de distribution, il est possible de mutualiser la pompe entre les différents dispositifs de terminaison de ligne et ainsi de réduire les coûts du réseau.

Selon un autre mode de réalisation du réseau selon l'invention, la branche du réseau comprend une deuxième fibre optique, la première fibre optique permettant d'acheminer les premier et deuxième signaux jusqu'au dispositif de terminaison de ligne et la deuxième fibre optique permettant d'acheminer le deuxième signal modulé jusqu'au central optique.

En séparant les sens descendant et remontant, on évite que la réception du deuxième signal modulé par les moyens de réception du central optique ne soit perturbée par un effet de rétrodiffusion Rayleigh due à la réflexion d'une partie du deuxième signal optique sur le dispositif de terminaison de ligne.

En effet, comme les signaux descendants et les signaux remontants transitent dans deux fibres optiques distinctes, il est possible d'augmenter la puissance d'émission de la diode laser. Cela permet d'augmenter davantage la puissance optique du premier signal de données. Ainsi, on peut se contenter d'un unique milieu d'amplification.

De façon avantageuse, les premiers et deuxièmes moyens d'émission des premiers et deuxièmes moyens d'amplification comprennent au moins une diode laser.

De tels composants optiques sont produits à grande échelle et sont par conséquent peu coûteux.

L'invention concerne enfin un dispositif de terminaison de ligne d'un réseau optique passif apte à recevoir au moins un premier signal optique de données, ledit dispositif comprenant :
- des moyens de réception du premier signal optique,
- des moyens de séparation dudit premier signal optique et d'un deuxième signal optique d'amplification,
- des moyens de modulation du deuxième signal optique d'amplification,
- des moyens d'amplification du deuxième signal optique modulé,
- des moyens d'injection du deuxième signal modulé dans ledit réseau,
lesdits moyens de modulation étant connectés en sortie des moyens de séparation des premier et deuxième signaux, et en entrée des moyens d'amplification.

Selon une caractéristique du dispositif de terminaison de ligne selon l'invention, les moyens de séparation des premier et deuxième signaux optiques comprennent au moins un réseau de Bragg, les moyens de modulation du deuxième signal optique comprennent un modulateur à électro-absorption, et les moyens d'amplification comprennent un amplificateur optique à semi-conducteur.

De tels composants ont un coût assez faible, car ce sont des composants optiques d'usage courant.

D'autres caractéristiques et avantages apparaîtront à la lecture de modes de réalisation préférés décrits en référence aux dessins dans lesquels :
- la figure 1 représente un réseau d'accès optique passif longue distance connu des inventeurs de la présente demande de brevet,
- la figure 2 représente un réseau optique passif TDM longue portée utilisant à la fois la fibre optique et un tronçon de fibre optique dopée à l'erbium comme milieux d'amplification,
- la figure 3 représente un dispositif de terminaison de ligne conforme à l'invention,
- la figure 4 représente un réseau optique passif TDM longue portée dont les branches comprennent une fibre optique véhiculant les signaux remontant et une fibre optique véhiculant les signaux descendant.

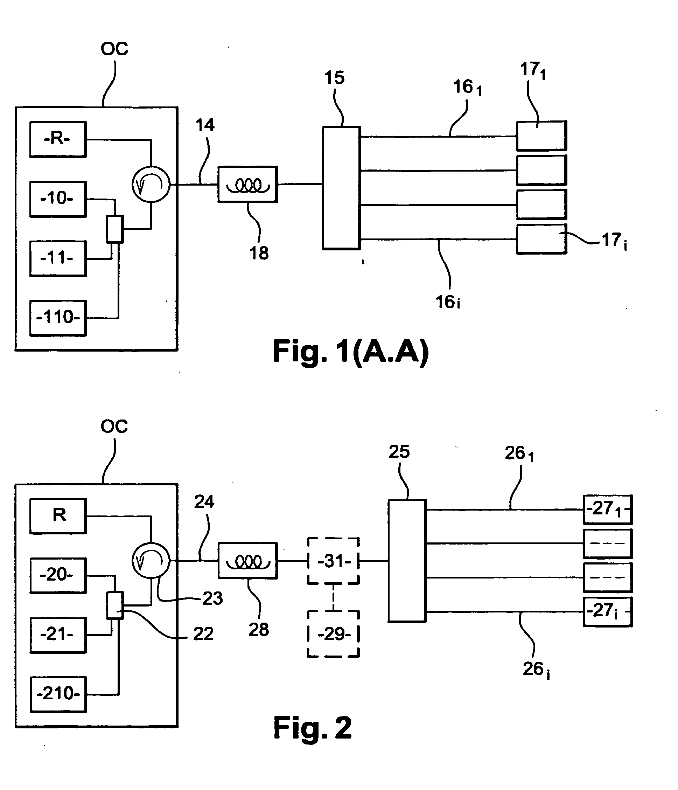

La figure 2 représente un réseau optique passif TDM longue portée de type point à multipoints selon un premier mode de réalisation de l'invention. Un central optique OC constitue une première extrémité du réseau. Une première extrémité d'une fibre optique 24 est connectée à la sortie du central optique OC. Une deuxième extrémité de la fibre optique 24 est connectée à l'entrée d'au moins un coupleur optique 25 une entrée vers N sorties, N représentant le nombre de branches que possède le réseau. La fibre optique 24 est appelée branche principale du réseau. Une première extrémité d'une fibre optique 26ⱼ, j ∈ {1, 2, ..., N}, est connectée à l'une des N sorties Sⱼ du coupleur optique 25. Une deuxième extrémité de la fibre optique 26ⱼ est connectée à un dispositif de terminaison de ligne 27ᵢ, i ∈ {1, 2, ..., N} auquel sont connectés un ou plusieurs abonnés. Les fibres optiques 26₁ à 26_{N} sont appelées branches secondaires du réseau.

Le central optique OC comporte un premier laser 20 émettant un premier signal optique associé à une longueur d'onde particulière. Ce premier signal optique véhicule dans le réseau des données à destination des différents abonnés connectés selon le principe du multiplexage temporel. Le central optique comporte également une deuxième diode laser 210 émettant un deuxième signal optique d'amplification associé à une longueur d'onde particulière distincte de la longueur d'onde associée au premier signal optique de données et une troisième diode laser 21, elle aussi émettant un troisième signal optique d'amplification associé à une longueur d'onde particulière distincte des deux précédentes. Les deuxième et troisième signaux optique d'amplification sont des signaux continus, c'est-à-dire qu'ils ne véhiculent pas de données dans le sens descendant.

Les sorties du laser 20 et des diodes laser 210 et 21 sont reliées chacune à une entrée d'un multiplexeur optique 22 trois entrées vers une sortie (3 :1). Le central optique OC comporte également un module de réception R des signaux émis par les dispositifs de terminaison de ligne 27₁ à 27_{N}. La sortie du multiplexeur optique 22 et l'entrée du module de réception R sont chacune connectées à une entrée d'un circulateur optique 23 comportant trois ports. Une première extrémité de la fibre optique 24 est connectée au troisième port du circulateur optique 23 permettant d'une part aux signaux émis par le laser 20 et les diodes laser 210 et 21 de transiter dans le réseau en direction des dispositifs de terminaison de ligne 27₁ à 27_{N}, et d'autre part aux signaux émis par les dispositifs de terminaison de ligne de transiter dans le réseau en direction du central optique OC et des moyens de réceptions R.

Chacune des fibres optiques 24 et 26₁ à 26_{N} constitutives du réseau permet un transit bidirectionnel des signaux optiques dans le réseau, c'est-à-dire que les signaux remontants, d'un dispositif de terminaison de ligne vers le central optique, et les signaux descendants, du central vers les dispositifs de terminaison de ligne, circulent dans la même fibre optique. Ceci permet de réduire les coûts lors de la mise en place du réseau et de faciliter sa maintenance.

Dans un tel mode de réalisation, une section de fibre optique dopée à l'erbium 28 est insérée dans la fibre optique principale 24. Une telle section de fibre optique 28 sert de milieu d'amplification passif pour le signal optique de données. Ce milieu d'amplification est excité au moyen du signal optique d'amplification émis par la diode laser 210 de sorte à pouvoir amplifier le signal optique de données. Une telle technique d'amplification est appelée technique d'amplification optique déportée ou ROPA, pour Remote Optical Pumped Amplification.

Dans une variante de réalisation de la présente invention non représentée sur les figures, une section de fibre optique dopée à l'erbium 28 est insérée dans une ou plusieurs des branches secondaires 26, à 26_{N} du réseau.

Afin de réduire les coûts d'exploitation du réseau, les inventeurs de la présente demande de brevet proposent de supprimer les moyens d'émission classiquement présents dans les dispositifs de terminaison de ligne.

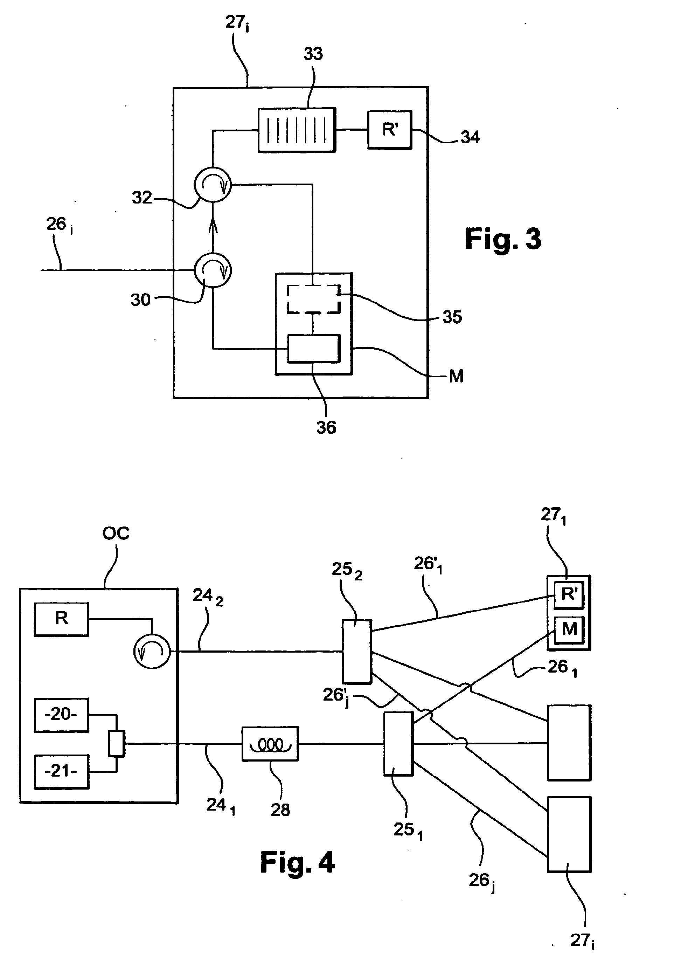

Ainsi, la figure 3 représente un dispositif de terminaison de ligne 27ᵢ conforme à l'invention. Un tel dispositif conforme à l'invention comporte un premier circulateur optique 30 dont le principe de fonctionnement est le même que celui du circulateur 23. Un premier port du circulateur optique 30 est connecté en entrée d'un premier port d'un deuxième circulateur optique 32. Un deuxième port du deuxième circulateur optique 32 est connecté en entrée d'un réseau de Bragg 33. Le réseau de Bragg 33 est ensuite connecté à des moyens de réception R' du signal optique de données descendant. Le réseau de Bragg 33 permet de séparer le premier signal optique de données du deuxième signal optique d'amplification lorsque ceux-ci arrivent en entrée du dispositif de terminaison de ligne 27ᵢ. Le réseau de Bragg 33 utilisé est tel qu'il réfléchi le deuxième signal optique et qu'il laisse passer le premier signal optique de données vers les moyens de réception R'.

Le deuxième signal optique ainsi réfléchi est envoyé au travers d'un troisième port du deuxième circulateur 32 en entrée d'un dispositif de modulation d'un signal optique 35, tel que par exemple un MEA (Electro-Absorption Modulator pour Modulateur à Electro-Absorption) apte à moduler le deuxième signal optique avec des données à transmettre au central optique. Le MEA reçoit les données avec lesquelles le deuxième signal optique est modulé sous forme d'un signal électrique. Une fois le deuxième signal optique modulé avec les données à remonter vers le central optique OC, il est envoyé en entrée d'un amplificateur optique à semi-conducteurs 36 de sorte à amplifier la puissance optique du signal modulé. Enfin, la sortie de l'amplificateur optique à semi-conducteurs 36 est connectée à un deuxième port du circulateur optique 30. Le troisième port du circulateur 30 étant connecté la fibre optique 26ⱼ, il permet d'injecter le signal modulé dans la branche du réseau en direction du central optique. Le MEA 35 et l'amplificateur optique à semi-conducteurs 36 constituent des moyens de modulation et d'amplification M du signal d'amplification.

Dans ce mode de réalisation, afin de s'assurer que le deuxième signal optique d'amplification atteigne le dispositif de terminaison de ligne 27ᵢ, on utilise la deuxième diode laser 21. Celle-ci émet un troisième signal d'amplification apte à exciter la fibre optique 24 qui devient alors le milieu d'amplification. En traversant la fibre optique 24, le deuxième signal d'amplification émis par la diode laser 210 voit sa puissance optique augmentée. Une telle technique utilise l'effet RAMAN et permet d'avoir une amplification distribuée sur toute la longueur de la fibre optique.

A titre d'exemple, si le signal optique de données est émis à une longueur d'onde de 1550 nanomètre, le deuxième signal optique émis par la diode laser 210 doit être émis à une longueur d'onde de 1480 nanomètres. Afin d'augmenter la puissance optique du deuxième signal d'amplification émis par la diode laser 210, le troisième signal d'amplification émis par la diode laser 21 doit, quant à lui, être émis à une longueur d'onde de 1380 nanomètres.

Enfin, le deuxième signal optique modulé au niveau des dispositifs de terminaison de ligne et injectés dans le réseau à destination du central optique voit sa puissance optique amplifiée en traversant la fibre optique 24 tout comme le deuxième signal d'amplification émis par la diode laser 210. Ceci s'explique par le fait que ces deux signaux sont associés à la même longueur d'onde.

| SENS DESCENDANT | |
|---|---|
| Pertes de la fibre à 1550 nm | 20 dB (SSMF) |
| Composants optiques en ligne | 15 dB (coupleur 1:32) ; 6 dB (multiplexeur WDM + circulateurs) |
| Puissance de l'émetteur au central | 12 dBm |
| Gain ROPA | 10 dB |
| Bilan de puissance | -19 dBm |
| | |

| SENS REMONTANT | |
|---|---|
| Pertes de la fibre à 1480 nm aller et retour | 2x 25 dB (SSMF) |
| Composants optiques en ligne | 2x15 dB (coupleur 1:32) ; 2x6 dB (multiplexeur WDM + circulateurs) |
| Puissance de pompe au central | 23 dBm |
| Gain Raman 1480 nm co-propagatif (descendant) | 25 dB |
| Gain Raman 1480 nm contrapropagatif (remontant) | 25 dB |
| Gain SOA | 20 dB |
| Rétrodiffusion de Rayleigh | -12 dBm |
| Puissance reçue à 1480 nm au central | +1 dBm |

Les deux tableaux précédents indiquent à titre d'exemple les bilans de puissance optique dans le sens descendant et dans le sens remontant correspondant à un réseau comportant deux milieux d'amplification 24 et 28.

Dans ces tableaux, on voit que les budgets optiques correspondant aux sens de transmission descendant et remontant sont équilibrés. Dans le sens remontant, on constate que la valeur de la puissance optique reçue par le central optique OC est supérieure à la puissance du signal optique de rétrodiffusion Rayleigh. Ainsi, les moyens de réception R placés dans le central optique OC ne sont pas éblouis par le signal rétrodiffusé et la réception des composantes optiques de données remontantes n'est pas perturbée.

Toujours en référence à la figure 2, nous allons décrire un second mode de réalisation de la présente invention. Dans ce mode de réalisation, la fibre optique est le seul milieu d'amplification des signaux optiques de données et d'amplification.

Dans ce mode de réalisation, le deuxième signal optique d'amplification émis par la diode laser 210 permet d'exciter la fibre optique 24 de sorte que lorsque le signal optique de données traverse la fibre optique 24, celui-ci voit sa puissance optique augmenter. Le troisième signal optique d'amplification émis par la diode laser 21, quant à lui, permet d'exciter la fibre optique 24 de sorte que le deuxième signal optique d'amplification émis par la diode laser 210 voit sa puissance optique augmenter lorsqu'il parcoure la fibre optique 24.

A titre d'exemple, si le signal optique de données est émis à une longueur d'onde de 1550 nanomètres, le deuxième signal optique émis par la diode laser 210 doit être émis à une longueur d'onde de 1450 nanomètres. Afin d'augmenter la puissance optique du deuxième signal d'amplification émis par la diode laser 210, le troisième signal d'amplification émis par la diode laser 21 doit, quant à lui, être émis à une longueur d'onde de 1350 nanomètres.

Enfin, le deuxième signal optique modulé au niveau des dispositifs de terminaison de ligne et injectés dans le réseau à destination du central optique voit sa puissance optique amplifiée en traversant la fibre optique 24 tout comme le deuxième signal d'amplification émis par la diode laser 210. Ceci s'explique par le fait que ces deux signaux sont associés à la même longueur d'onde.

| SENS DESCENDANT | |
|---|---|
| Pertes de la fibre à 1550 nm | 20 dB (SSMF) |
| Composants optiques en ligne | 15 dB (coupleur 1:32) ; 4 dB (multiplexeur WDM + circulateurs) |
| Puissance de l'émetteur au central | 10 dBm |
| Gain Raman à 1550 nm | 10 dB |
| Bilan de puissance | -19 dBm |
| | |

| SENS REMONTANT | |
|---|---|
| Pertes de la fibre à 1450 nm aller et retour | 2x 25 dB (SSMF) |
| Composants optiques en ligne | 2x15 dB (coupleur 1:32) ; 2x4 dB (multiplexeur WDM + circulateurs) |
| Puissance de pompe au central à 1450 nm | 27 dBm |
| Gain Raman 1450 nm descendant | 21 dB |
| Gain Raman 1450 nm remontant | 21 dB |
| Gain SOA | 20 dB |
| Rétrodiffusion de Rayleigh | -12 dBm |
| Puissance reçue à 1480 nm au central | +1 dBm |

Les deux tableaux précédents indiquent à titre d'exemple les bilans de puissance optique dans le sens descendant et dans le sens remontant correspondant à un réseau comportant un milieu d'amplification 24.

Dans ces tableaux, on voit que les budgets optiques correspondant aux sens de transmission descendant et remontant sont équilibrés. Dans le sens remontant, on constate que la valeur de la puissance optique reçue par le central optique OC est supérieure à la puissance du signal optique de rétrodiffusion Rayleigh. Ainsi, les moyens de réception R placés dans le central optique OC ne sont pas éblouis par le signal rétrodiffusé et la réception des composantes optiques de données remontantes n'est pas perturbée.

Encore en référence à la figure 2, il est possible de connecter une troisième diode laser 29 émettant un quatrième signal optique d'amplification en entrée du coupleur optique 25 au moyen d'un multiplexeur 31. Afin d'éviter que la diode laser 29 ne soit éblouie par les signaux optiques d'amplification issus des diodes laser 21 et 210, on dispose un isolateur entre le multiplexeur 31 et la diode laser 29. Le quatrième signal optique d'amplification issu de cette troisième diode laser 29 est injecté dans le coupleur optique 25 de sorte à amplifier les signaux optiques de données remontants et descendants. Une telle diode laser 29 émet, par exemple, une composante optique d'amplification associée à une longueur d'onde de 1380 nanomètres dans le mode de réalisation de la présente invention comportant deux milieux d'amplification 24 et 28 ; et de 1350 nanomètre dans le mode de réalisation dans lequel le réseau ne comporte qu'un seul milieu d'amplification.

La mutualisation de la troisième diode laser 29 permet de réduire les coûts du réseau en permettant de supprimer des moyens d'amplification présents dans les dispositifs de terminaison de lignes classiques.

La figure 4 représente un autre mode de réalisation d'un réseau optique passif TDM longue distance. Les éléments constitutifs du réseau communs aux modes de réalisation décrits aux figures précédentes portent les mêmes références et ne seront pas décrits.

Dans ce mode de réalisation, les branches du réseau comprennent deux fibres optiques chacune dédiée à un sens de transit des signaux optiques dans le réseau. Ainsi, la branche principale du réseau est constituée des fibres optiques 24₁ et 24₂. La fibre optique 24₁ assure le transport des signaux optiques émis par le laser 20 et la diode laser 21. Il en est de même pour les fibres optiques secondaires 26₁ à 26_{N}. La fibre optique principale 24₂ ainsi que les fibres optiques secondaires 26'₁ à 26'_{N}, assurent, quant à elles, le transport du signal optique remontant modulé.

Dans ce mode de réalisation, les dispositifs de terminaison de ligne 27₁ à 27_{N} sont modifiés de sorte à s'adapter à cette configuration à deux fibres optiques. Ainsi, dans ce dispositif, le circulateur 30 est supprimé de sorte que la fibre optique 26ⱼ est directement connectée au premier port du circulateur 32. La fibre optique 26'ⱼ, quant à elle, est connectée en sortie de l'amplificateur optique à semi-conducteur 36, permettant ainsi au signal optique modulé d'être transporté vers le central optique OC.

Les fibres optiques 24, et 26₁ à 26_{N} étant dédiées au sens de communication descendant, il est possible d'augmenter la puissance d'émission du signal de données émis par le laser 20 mais aussi la puissance du deuxième signal d'amplification émis par la diode laser 21 sans risquer de perturber la réception du signal optique modulé remontant par les moyens de réception R du central optique. En effet, le fait de transporter les signaux descendants et les signaux remontants dans des fibres optiques distinctes permet de supprimer l'effet de rétrodiffusion Rayleigh, effet qui est à l'origine de perturbation dans la réception des signaux optiques.

Dans une première variante de réalisation, le milieu passif d'amplification est constitué d'une section de fibre dopée à l'erbium 28 disposée dans l'une des fibres optiques 24₁ ou 26ⱼ. Dans une deuxième variante de réalisation, le milieu passif d'amplification est constitué des fibres optiques 24₁ et 26₁ à 26_{N}.

| SENS DESCENDANT | |
|---|---|
| Pertes de la fibre à 1550 nm | 20 dB (SSMF) |
| Composants optiques en ligne | 15 dB (coupleur 1:32) ; 4 dB (multiplexeur WDM + circulateurs+ isolateur) |
| Puissance de l'émetteur au central | 10 dBm |
| Gain ROPA | 10 dB |
| Puissance à la réception | -19 dBm |

| | |
|---|---|
| | |

| SENS REMONTANT | |
|---|---|
| Pertes de la fibre à 1480 nm aller et retour | 2x25 dB (SSMF) |
| Composants optiques en ligne | 2x15 dB (coupleur 1:32) ; 6 dB (multiplexeur WDM + circulateurs + isolateur) |
| Puissance de pompe au central | 27 dBm |
| Gain SOA chez l'abonné | 20 dB |
| Gain préamplificateur au central | 20 dB |
| Puissance reçue à 1480 nm au central | -19 dBm |

Les deux tableaux précédents indiquent à titre d'exemple les bilans de puissance optique dans le sens descendant et dans le sens remontant correspondant à un réseau dont les branches sont constituées de deux fibres optiques une pour le sens remontant et une pour le sens descendant et dans lequel, le milieu d'amplification est constitué par une section de fibre dopée à l'erbium 28.

Dans une variante de réalisation non représentée sur les figures, il est possible de connecter une troisième diode laser émettant un troisième signal optique d'amplification en entrée du coupleur optique 25₂ au moyen d'un multiplexeur. Afin d'éviter que la troisième diode laser ne soit éblouie par les signaux optiques d'amplification issus des diodes laser 20 et 210, on dispose un isolateur entre le multiplexeur et la troisième diode laser. Le troisième signal optique d'amplification issu de cette troisième diode laser est injecté dans le coupleur optique 25₂ de sorte à amplifier les signaux optiques de données remontants Une telle diode laser émet, par exemple, une composante optique d'amplification associée à une longueur d'onde de 1350 nanomètres dans le mode de réalisation de la présente invention comportant un seul milieu d'amplification constitué par la fibre optique 24₂.

La mutualisation de la troisième diode laser permet de réduire les coûts du réseau en permettant de supprimer des moyens d'amplification présents dans les dispositifs de terminaison de lignes classiques.

Quelle que soit la variante de réalisation implémentée, il n'est pas nécessaire d'amplifier le deuxième signal d'amplification comme c'est le cas dans le mode de réalisation dans lequel les branches du réseau ne sont constituées que d'une seule fibre optique. Ceci tient au fait que la puissance optique d'émission du signal d'amplification est supérieure dans le mode de réalisation à fibres optiques par branches car il n'y a pas d'effet de rétrodiffusion Rayleigh. Ainsi, seul le signal optique de données doit être amplifié.

La présente invention dans tous ses modes de réalisation peut être mise en oeuvre dans des réseaux optiques point-à-point. Dans un tel mode de réalisation, il faut prévoir soit un laser d'amplification pour chaque branche du réseau soit un seul laser et des moyens pour le mutualiser sur l'ensemble des branches du réseau.

## Revendications

1. Réseau optique passif comprenant un central optique (OC) relié à au moins un dispositif de terminaison de ligne (27ᵢ) par au moins une branche (24, 26) dudit réseau, ladite branche comprenant au moins un milieu d'amplification (24, 28) passif, ledit central comprenant
- des moyens d'émission/réception (20, R) d'un premier signal optique de données,
- des premiers moyens d'amplification (210, 21) comprenant des moyens d'émission d'au moins un deuxième signal optique d'amplification, ledit deuxième signal excitant le milieu d'amplification (24, 28) de sorte à amplifier la puissance optique d'un signal optique,
ledit dispositif de terminaison de ligne **caractérisé en ce que** il comprend :
- des moyens de réception (R') du premier signal optique,
- des moyens de séparation (33) des premier et deuxième signaux optiques,
- des moyens de modulation (35) du deuxième signal optique d'amplification avec des données à transmettre au central optique,
- des moyens d'injection (30) dudit deuxième signal modulé dans ladite branche du réseau, en direction du central optique.

2. Réseau selon la revendication 1, **caractérisé en ce que** il comprend :
- des moyens de séparation (33) des premier et deuxième signaux optiques,
- des moyens d'amplification (36) dudit deuxième signal optique, et **en ce que** lesdits moyens de modulation (35) du deuxième signal optique sont connectés en sortie des moyens de séparation (30) des premier et deuxième signaux, et en entrée des moyens d'amplification (36) dudit deuxième signal optique.

3. Réseau selon l'une quelconque des revendications 1 à 2, **caractérisé en ce que** la branche du réseau comprend une première fibre optique (24), et **en ce que** les moyens d'amplification (21, 210) comprennent des premiers moyens d'émission (210) du deuxième signal optique d'amplification et des deuxièmes moyens d'émission (21) d'un troisième signal optique d'amplification permettant d'amplifier ledit deuxième signal optique.

4. Réseau selon la revendication 3, comprenant au moins deux dispositifs de terminaison de ligne (27ᵢ) chacun relié par une première (26_{J}), et respectivement, une deuxième branche (26'j) du réseau à un élément de distribution (25₁, 25₂), ledit élément de distribution étant lui-même relié au central optique par une troisième branche (24₁, 24₂) du réseau, **caractérisé en ce que** ledit réseau comprend des deuxièmes moyens d'amplification (28) reliés audit élément de distribution, lesdits deuxièmes moyens d'amplification étant aptes à amplifier la puissance optique d'un signal optique traité par ledit élément de distribution.

5. Réseau selon l'une des revendications 1 à 4 **caractérisé en ce que** la branche du réseau comprend une deuxième fibre optique (24₂), la première fibre optique (24₁) permettant d'acheminer les premier et deuxième signaux jusqu'au dispositif de terminaison de ligne et la deuxième fibre optique (24₂) permettant d'acheminer le deuxième signal modulé jusqu'au central optique.

6. Réseau selon l'une quelconque des revendications précédentes **caractérisé en ce que** les premiers et deuxième moyens d'émission (210, 21) des premiers et deuxièmes moyens d'amplification (210, 21) comprennent au moins une diode laser.

7. Dispositif de terminaison de ligne (27ᵢ) d'un réseau optique passif selon la revendication 1, apte à recevoir au moins un premier signal optique de données, ledit dispositif caracatérisé en ce que il comprend :
- des moyens de réception (R') du premier signal optique,
- des moyens de séparation (33) dudit premier signal optique et d'un deuxième signal optique d'amplification,
- des moyens de modulation (35) du deuxième signal optique d'amplification avec des données à transmettre à un central optique,
- des moyens d'amplification (36) du deuxième signal optique,
- des moyens d'injection (30) du deuxième signal modulé dans ledit réseau, en direction du central optique,
lesdits moyens de modulation (35) étant connectés en sortie des moyens de séparation 33() des premier et deuxième signaux, et en entrée des moyens d'amplification (36).

8. Dispositif de terminaison de ligne selon la revendication 7, **caractérisé en ce que** les moyens de séparation (33) des premier et deuxième signaux optiques comprennent au moins un réseau de Bragg, **en ce que** les moyens de modulation (35) du deuxième signal optique comprennent un modulateur à électro-absorption, et **en ce que** les moyens d'amplification (36) comprennent un amplificateur optique à semi-conducteur.

## Patentansprüche

1. Passives optisches Netz, das eine optische Zentrale (OC) umfasst, die mit wenigstens einer Leitungsabschlussvorrichtung (27ᵢ) über wenigstens einen Zweig (24, 26) des Netzes verbunden ist, wobei der Zweig wenigstens ein passives Verstärkungsmedium (24, 28) enthält, wobei die Zentrale Folgendes umfasst:
- Mittel (20, R) zum Senden/Empfangen eines ersten optischen Datensignals,
- erste Verstärkungsmittel (210, 21), die Mittel zum Senden wenigstens eines zweiten optischen Verstärkungssignals enthalten, wobei das zweite Signal das Verstärkungsmedium (24, 28) in der Weise erregt, dass die optische Leistung eines optischen Signals verstärkt wird,
wobei die Leitungsabschlussvorrichtung **dadurch gekennzeichnet ist, dass** sie Folgendes umfasst:
- Mittel (R') zum Empfangen des ersten optischen Signals,
- Mittel (33) zum Trennen des ersten und des zweiten optischen Signals,
- Mittel (35) zum Modulieren des zweiten optischen Verstärkungssignals mit an die optische Zentrale zu übertragenden Daten,
- Mittel (30) zum Einleiten des modulierten zweiten Signals in den Zweig des Netzes in Richtung der optischen Zentrale.

2. Netz nach Anspruch 1, **dadurch gekennzeichnet, dass** es Folgendes umfasst:
- Mittel (33) zum Trennen des ersten und des zweiten optischen Signals,
- Mittel (36) zum Verstärken des zweiten optischen Signals,
und dass die Mittel (35) zum Modulieren des zweiten optischen Signals mit dem Ausgang der Mittel (30) zum Trennen des ersten und des zweiten Signals und mit dem Eingang der Mittel (36) zum Verstärken des zweiten optischen Signals verbunden sind.

3. Netz nach einem der Ansprüche 1 bis 2, **dadurch gekennzeichnet, dass** der Zweig des Netzes eine erste optische Faser (24) umfasst und dass die Verstärkungsmittel (21, 210) erste Mittel (210) zum Senden des zweiten optischen Verstärkungssignals und zweite Mittel (21) zum Senden eines dritten optischen Verstärkungssignals, das ermöglicht, das zweite optische Signal zu verstärken, umfassen.

4. Netz nach Anspruch 3, das wenigstens zwei Leitungsabschlussvorrichtungen (27ᵢ) umfasst, wovon jede durch einen ersten (26_{J}) bzw. einen zweiten Zweig (26'j) des Netzes mit einem Verteilungselement (25₁, 25₂) verbunden ist, wobei das Verteilungselement seinerseits mit der optischen Zentrale durch einen dritten Zweig (24₁, 24₂) des Netzes verbunden ist, **dadurch gekennzeichnet, dass** das Netz zweite Verstärkungsmittel (28) umfasst, die mit dem Verteilungselement verbunden sind, wobei die zweiten Verstärkungsmittel dafür ausgelegt sind, die optische Leistung eines optischen Signals, das von dem Verteilungselement verarbeitet wird, zu verstärken.

5. Netz nach einem der Ansprüche 1 bis 4, **dadurch gekennzeichnet, dass** der Zweig des Netzes eine zweite optische Faser (24₂) umfasst, wobei die erste optische Faser (24₁) ermöglicht, das erste und das zweite Signal bis zu der Leitungsabschlussvorrichtung zu leiten, und die zweite optische Faser (24₂) ermöglicht, das zweite modulierte Signal bis zu der optischen Zentrale zu leiten.

6. Netz nach einem der vorhergehenden Ansprüche, **dadurch gekennzeichnet, dass** die ersten und zweiten Mittel (210, 21) der ersten und zweiten Verstärkungsmittel (210, 21) wenigstens eine Laserdiode enthalten.

7. Leitungsabschlussvorrichtung (27ᵢ) eines passiven optischen Netzes nach Anspruch 1, die wenigstens ein erstes optisches Datensignal empfangen kann, wobei die Vorrichtung **dadurch gekennzeichnet ist, dass** sie Folgendes umfasst:
- Mittel (R') zum Empfangen des ersten optischen Signals,
- Mittel (33) zum Trennen des ersten optischen Signals und eines zweiten optischen Verstärkungssignals,
- Mittel (35) zum Modulieren des zweiten optischen Verstärkungssignals mit Daten, die an eine optische Zentrale übertragen werden sollen,
- Mittel (36) zum Verstärken des zweiten optischen Signals,
- Mittel (30) zum Einleiten des zweiten modulierten Signals in das Netz in Richtung zu der optischen Zentrale,
wobei die Modulationsmittel (35) mit dem Ausgang der Mittel (33) zum Trennen des ersten und des zweiten Signals und mit dem Eingang der Verstärkungsmittel (36) verbunden sind.

8. Leitungsabschlussvorrichtung nach Anspruch 7, **dadurch gekennzeichnet, dass** die Mittel (33) zum Trennen des ersten und des zweiten optischen Signals wenigstens ein Bragg-Gitter umfassen, dass die Mittel (35) zum Modulieren des zweiten optischen Signals einen Modulator mit Elektroabsorption enthalten und dass die Verstärkungsmittel (36) einen optischen Halbleiterverstärker umfassen.

## Claims

1. Passive optical network comprising an optical exchange (OC) linked to at least one line termination device (27ᵢ) via at least one branch (24, 26) of the said network, the said branch comprising at least one passive amplifying medium (24, 28), the said exchange comprising
- means (20, R) for transmitting/receiving a first optical data signal,
- first amplifying means (210, 21) comprising means for transmitting at least a second optical amplification signal, the said second signal exciting the amplifying medium (24, 28) in such a way as to amplify the optical power of an optical signal,
the said line termination device being **characterized in that** it comprises
- means (R') for receiving the first optical signal,
- means (33) for separating the first and second optical signals,
- means (35) for modulating the second optical amplification signal with data to be transmitted to the optical exchange,
- means (30) for injecting the said second modulated signal into the said branch of the network, in the direction of the optical exchange.

2. Network according to Claim 1, **characterized in that** it comprises:
- means (33) for separating the first and second optical signals,
- means (36) for amplifying the said second optical signal,
and **in that** the said means (35) for modulating the second optical signal are connected to the output of the means (30) for separating the first and second signals, and to the input of the means (36) for amplifying the said second optical signal.

3. Network according to either one of Claims 1 and 2, **characterized in that** the branch of the network comprises a first optical fibre (24), and **in that** the amplification means (21, 210) comprise first means (210) for transmitting the second optical amplification signal and second means (21) for transmitting a third optical amplification signal allowing the said second optical signal to be amplified.

4. Network according to Claim 3, comprising at least two line termination devices (27ᵢ) each connected via a first branch (26ⱼ) and, respectively, a second branch (26'j) of the network to a distribution element (25₁, 25₂), the said distribution element itself being connected to the optical exchange via a third branch (24₁, 24₂) of the network, **characterized in that** the said network comprises second amplification means (28) connected to the said distribution element, the said second amplification means being capable of amplifying the optical power of an optical signal processed by the said distribution element.

5. Network according to one of Claims 1 to 4, **characterized in that** the branch of the network comprises a second optical fibre (24₂), the first optical fibre (24₁) allowing the first and second signals to be routed to the line termination device and the second optical fibre (24₂) allowing the second modulated signal to be routed to the optical exchange.

6. Network according to any one of the preceding claims, **characterized in that** the first and second means (210, 21) for transmitting the first and second amplification means (210, 21) comprise at least one laser diode.

7. Line termination device (27ᵢ) of a passive optical network according to Claim 1, capable of receiving at least a first optical data signal, the said device being **characterized in that** it comprises
- means (R') for receiving the first optical signal,
- means (33) for separating the said first optical signal and a second optical amplification signal,
- means (35) for modulating the second optical amplification signal with data to be transmitted to an optical exchange,
- means (36) for amplifying the second optical signal,
- means (30) for injecting the said second modulated signal into the said network, in the direction of the optical exchange,
the said modulation means (35) being connected to the output of the means (33) for separating the first and second signals, and to the input of the amplification means (36).

8. Line termination device according to Claim 7, **characterized in that** the means (33) for separating the first and second optical signals comprise at least one Bragg grating, **in that** the means (35) for modulating the second optical signal comprise an electro-absorption modulator, and **in that** the amplification means (36) comprise a semiconductor optical amplifier.
